(19) **Europäisches Patentamt**
**European Patent Office**
**Office européen des brevets**

(11) **EP 2 668 730 B1**

(12) **FASCICULE DE BREVET EUROPEEN**

(45) Date de publication et mention
de la délivrance du brevet:
**20.12.2017 Bulletin 2017/51**

(21) Numéro de dépôt: **12706633.0**

(22) Date de dépôt: **26.01.2012**

(51) Int Cl.:
*H04B 3/46* $^{(2015.01)}$      *H04B 3/54* $^{(2006.01)}$
*H04L 1/24* $^{(2006.01)}$      *H04L 25/02* $^{(2006.01)}$
*H04B 3/06* $^{(2006.01)}$      *H04L 25/03* $^{(2006.01)}$

(86) Numéro de dépôt international:
**PCT/FR2012/050171**

(87) Numéro de publication internationale:
**WO 2012/101386 (02.08.2012 Gazette 2012/31)**

(54) **PROCÉDÉ ET DISPOSITIF D'ÉMISSION D'UN SIGNAL UTILISANT UN MASQUE DE PUISSANCE D'ÉMISSION**

VERFAHREN UND VORRICHTUNG ZUR ÜBERTRAGUNG EINES SIGNALS MITTELS EINER ÜBERTRAGUNGSLEISTUNGSMASKE

METHOD AND DEVICE FOR TRANSMITTING A SIGNAL USING A TRANSMISSION POWER MASK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.01.2011 FR 1150650**

(43) Date de publication de la demande:
**04.12.2013 Bulletin 2013/49**

(73) Titulaire: **MStar Semiconductor Inc.**
**HsinChu County - Taïwan R.O.C 302 (TW)**

(72) Inventeurs:
• **MILLERET, Hervé**
**F-92340 Bourg-la-Reine (FR)**
• **ISSON, Olivier**
**F-92340 Bourg-la-Reine (FR)**

(74) Mandataire: **Novagraaf Technologies**
**12 Place des Halles Saint Louis**
**56100 Lorient (FR)**

(56) Documents cités:
**EP-A1- 1 300 964    EP-A1- 1 394 960**
**EP-A1- 1 675 368    WO-A1-2010/037957**
**US-B1- 6 292 559**

**Description**

**DOMAINE TECHNIQUE DE L'INVENTION**

L'invention se rapporte à un procédé d'émission d'un signal utilisant un masque de puissance d'émission dans un réseau de télécommunication, et à un dispositif pour la mise en oeuvre dudit procédé.
L'invention s'inscrit dans le domaine de la transmission de données numériques dans un réseau de télécommunication filaire ou non filaire.

**ETAT DE LA TECHNIQUE ANTERIEURE**

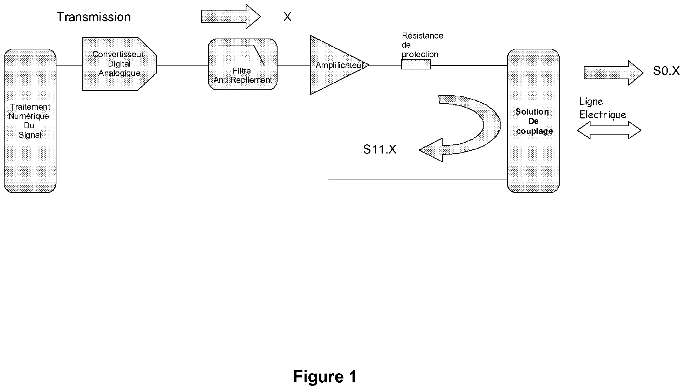

Dans un tel réseau de communication les données numériques sont échangées entre des dispositifs capables de recevoir et d'émettre des données numériques au travers de liaison physique correspondant à un canal de communication.
Ce réseau de communication peut, par exemple, se rapporter à un réseau de transport d'énergie électrique dans lequel les liaisons physiques correspondent à des câbles ou fils électriques pouvant être des câbles de transmission d'énergie ou des câbles de communication utilisés au sein d'installations fixes (réseau de distribution, réseau de communications intérieures ou extérieures) ou mobile (réseau d'énergie ou de communication dans un avion, un bateau une automobile etc.). De tels câbles ou fils électriques sont pour certains susceptibles de transporter des tensions élevées à des fréquences très basses, par exemple 220V/50Hz pour l'Europe.
Dans ce type de réseau de communication, la transmission de données numériques, se rapportant à des informations de nature diverse, peut être effectuée selon une technologie relative aux courants porteurs.
Le problème technique qui se pose dans ces réseaux de communication, et en particulier dans des réseaux de transport d'énergie électrique, est de pouvoir assurer une injection optimale d'un signal dans une liaison physique, afin de lutter contre la perte de puissance entre le signal émis par le dispositif émetteur/récepteur et le signal reçu par le récepteur distant.
En effet dans un réseau de transport d'énergie, les liaisons physiques, tels que les fils électriques, ne sont pas adaptées au transport de tensions à des fréquences élevées comme celles utilisées par ces dispositifs émetteurs/récepteurs de type modem à courant porteur.
La transmission de données peut être, en effet, soumise à divers phénomènes et notamment à des phénomènes de réflexion, car le signal émis et donc injecté dans cette liaison physique par le dispositif émetteur/récepteur est réfléchi partiellement du fait d'une discontinuité d'impédance présentée par cette liaison physique, dont la cause est par exemple liée à de nombreuses épissures et autres dérivations ou à des équipements raccordés à cette liaison, ou encore du fait que des fils soient non appairés et de longueurs souvent bien différentes.
Dès lors, il résulte de ces réflexions qu'une partie de la puissance émise par le dispositif émetteur/récepteur revient au niveau de ce dispositif, ce qui limite ainsi la portée du signal injectée.
Ainsi, qu'il est illustré à la figure 1, lorsque le dispositif émetteur/récepteur émet un signal en fréquence noté X dans la liaison physique, une partie de ce signal est réfléchie sous forme d'écho S11.X, et une autre partie de ce signal S0.X est injectée dans la liaison physique. Nous utiliserons par la suite le terme d'écho pour désigner cette puissance retournée au niveau du dispositif émetteur/récepteur ayant émis le signal.
Les deux quantités S11 et S0, qui sont respectivement les fonctions de transfert du signal réfléchi et du signal injecté, sont liées par les relations suivantes :

$$\left| S0 \right|^2 \leq 1$$

$$\left| S11 \right|^2 = 1 - \left| S0 \right|^2$$

Le paramètre S0 ayant un module inférieur à 1, le phénomène se traduit alors par une perte de puissance transmise.
Concernant le masque de puissance d'émission, il est important de noter que les systèmes de télécommunication sont mis en oeuvre classiquement dans un contexte de régulation nationale ou internationale. Une autorité de régulation définit alors un niveau maximale de puissance autorisé qui est traduit généralement sous la forme d'un masque d'émission. Ce masque est figé et impose la puissance du signal émis. En conséquence le signal X qui sera émis par le dispositif émetteur/récepteur aura une puissance injectée dans la liaison physique qui doit être égale ou la plus proche possible de celle du masque d'émission.
On comprend donc que si on connait de façon précise la fonction de transfert S11, on pourra ajuster au mieux la puissance émise pour ne pas dépasser le maximum autorisé par la valeur constante de référence. Ainsi le dispositif émetteur/récepteur émettant le signal est capable de modifier la puissance du signal émis en transmettant X/S0 à la place de X de sorte que le signal injecté corresponde alors à S0.X/S0 = X.

On connaît dans l'art antérieur, un document relatif à une demande internationale WO2010/037957 illustré en figure 2, qui reprend ce principe en décrivant un procédé permettant d'estimer cet écho afin de pouvoir émettre un signal en tenant compte de cette estimation et ainsi adapter le masque de puissance d'émission.

Cependant, un inconvénient majeur de ce procédé réside dans le fait que l'estimation de l'écho H réalisée à partir du signal reçu H.X est inexacte du fait que l'écho estimé H contient les imperfections de la chaîne de réception du dispositif émetteur/récepteur avec la fonction de transfert $H = S11 + H_{imp}$ où $H_{imp}$ désigne la fonction de transfert des imperfections de la chaîne de réception.

De telles imperfections introduisent alors une erreur dans l'estimation de cet écho et par extension dans la détermination de la puissance à injecter dans la liaison physique.

De plus une telle erreur peut engendrer un dépassement du niveau maximale de puissance autorisé dans un réseau de communication.

On connaît également le document EP 1 300 964 qui décrit un procédé et un système de mesure de diaphonie dans un réseau XDSL

## EXPOSE DE L'INVENTION

L'invention propose d'améliorer la détermination de la perte de puissance entre le signal émis par le dispositif émetteur/récepteur et le signal injecté sur la liaison physique et reçu par le récepteur distant de sorte à contrer cette perte de puissance dans le cadre de la transmission de données.

Dans ce dessein, un aspect de l'invention se rapporte à un procédé d'émission d'un signal utilisant un masque de puissance d'émission, le signal étant émis par un dispositif émetteur/récepteur A relié à un dispositif émetteur/récepteur B par au moins une liaison physique, dans lequel ledit masque de puissance d'émission est adapté en fonction d'une fonction de transfert S11 relative à l'impédance de la liaison physique, de sorte à prendre en compte la puissance perdue lors de la transmission d'un signal.

Selon des modes de réalisation particuliers:

- le procédé comprend une étape d'initialisation comportant en outre des sous-étapes de mesures de tensions $V_{Ref}$, $V_{Ana}$ aux bornes d'un élément composant la chaîne de transmission du dispositif émetteur/récepteur A et de détermination de S11 ;
- l'étape d'initialisation est effectuée à des instants prédéfinis configurables ;
- plusieurs masques de puissances d'émissions sont définis et sélectionnés de façon périodique pour être utilisés lors de l'émission du signal, et
- les sous-étapes de mesures sont effectuées à partir de l'activation de connecteurs (14,13) d'un commutateur compris dans la chaîne de réception du dispositif émetteur/récepteur A.

L'invention se rapporte également à un dispositif émetteur/récepteur d'un signal en utilisant un masque de puissance d'émission vers un dispositif émetteur/récepteur B via au moins une liaison physique, comprenant :

- une chaîne de transmission de données, et
- une chaîne de réception de données comportant un commutateur.

Selon des modes de réalisation particuliers:

- la chaîne de transmission de données comporte :

  • un module de traitement du signal numérique ;
  • un module de conversion numérique vers analogique ;
  • un filtre anti repliement ;
  • un amplificateur ;
  • une résistance de protection, et
  • un dispositif de couplage ;

- la chaîne de réception de données comporte :

  • un dispositif de couplage ;

- un filtre de bande ;
- un amplificateur à gain variable ;
- un module de conversion analogique vers numérique ;
- un commutateur, et
- un module de traitement du signal numérique ;

- commutateur comprend :

  - une borne 1 reliée en amont d'un des éléments constitutifs de la chaîne de transmission suivants : la résistance de protection à l'emplacement 8, l'amplificateur à l'emplacement 9, ou le filtre anti repliement à l'emplacement 10, et
  - des bornes 4,5,6, reliées en amont 11 du filtre de bande de la chaîne de réception ;

- un module de commande apte à contrôler l'activation de connecteurs 12,13,14 du commutateur ;
- le module de commande coopère avec un module de mesure de signal reçu par le module de traitement du signal numérique de sorte à déterminer les tensions $V_{Ref}$, $V_{Ana}$ de chaque signal reçu en fonction de l'activation des connecteurs 12,13,14 du commutateur, et
- le dispositif émetteur/récepteur est un modem à courant porteur comportant un commutateur.

## BREVE DESCRIPTION DES FIGURES

D'autres caractéristiques et avantages de l'invention ressortiront à la lecture de la description qui suit, en référence aux figures annexées, qui illustrent à :

- la figure 1, une représentation schématique de la perte de puissance dans un dispositif émetteur récepteur ;

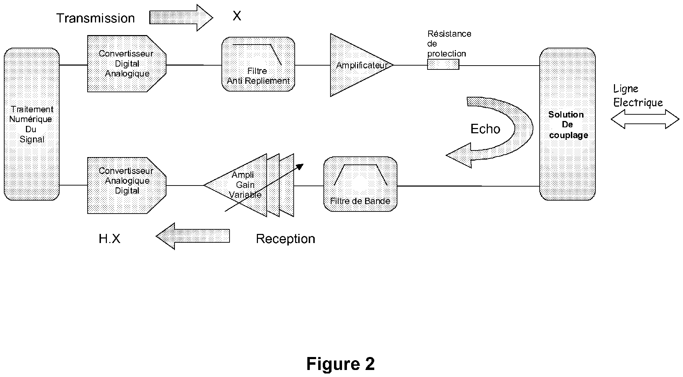

- la figure 2, une vue schématique du procédé décrit dans le document WO2010/037957 ;
- la figure 3, le dispositif émetteur/récepteur selon un mode de réalisation de la présente invention ;
- la figure 4A, la chaîne de transmission de données du dispositif émetteur/ récepteur ;
- la figure 4B, la chaîne de réception de données du dispositif émetteur/ récepteur ;
- la figure 5, un schéma illustrant la mesure de l'impédance d'une charge à l'aide d'une résistance Rmes ;
- les figures 6A, 6B et 6C, une vue schématique de la détermination de l'écho dans un dispositif émetteur/récepteur comportant un commutateur selon un mode de réalisation de la présente invention ;

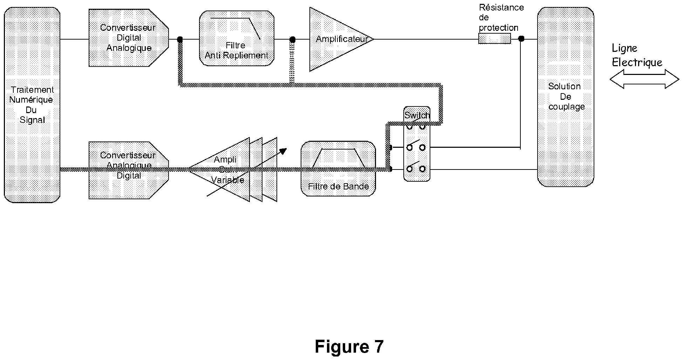

- la figure 7, un mode de mesure de la tension de référence dans un autre mode de réalisation ;
- la figure 8, un mode de réalisation de la présente invention dans lequel le commutateur possède cinq bornes d'entrée/sortie ;
- la figure 9, un mode de réalisation de la présente invention lorsque le commutateur est situé entre l'amplificateur à gain variable et le filtre de bande, et
- la figure 10, un mode de réalisation alternatif de la présente invention lorsque le commutateur est localisé entre le module de conversion analogique vers numérique et l'amplificateur à gain variable.

Pour plus de clarté, les éléments identiques ou similaires sont repérés par des signes de référence identiques sur l'ensemble des figures.

## DESCRIPTION DETAILLEE D'UN MODE DE REALISATION

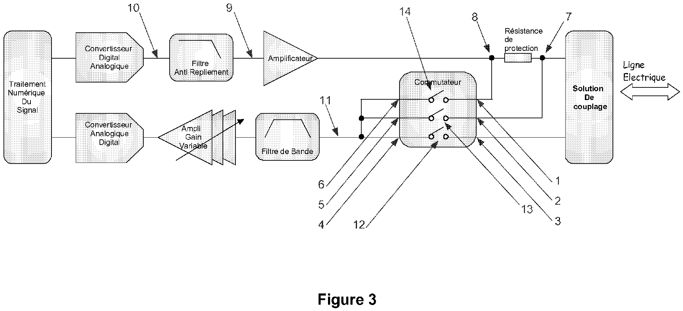

Dans un exemple de réalisation, la figure 3 décrit le dispositif émetteur récepteur conforme à un mode de réalisation de l'invention.

Dans ce présent mode de réalisation on considère que ce dispositif émetteur/ récepteur se rapporte à un modem à courant porteur mis en oeuvre dans un réseau de transport d'énergie électrique dans lequel les liaisons physiques correspondent à des câbles ou fils électriques. Cet exemple de réalisation de la présente invention s'inscrit donc dans la transmission de données par courant porteur, communément désignée par les sigles CPL ou PLT (acronyme anglais de Power Line Transmission).

Les câbles concernés peuvent être des câbles de transmission d'énergie ou des câbles de communication, dans des installations fixes (réseau de distribution, réseau de communication intérieur ou extérieur) ou mobiles (réseau d'énergie ou de communication dans un avion, un bateau, une automobile, etc.). Les câbles concernés peuvent être quelconques : coaxiaux ou bifilaires, en lignes parallèles ou en pair, lignes électriques de basse tension (110V/220V), lignes électrique de moyenne tension (~15kV), câble téléphonique, paire torsadée, câble coaxial, etc...

Dans un tel réseau un dispositif émetteur/récepteur A est capable d'émettre des données numériques vers un dispositif émetteur/récepteur B au travers de la liaison physique.

Pour ce faire, un dispositif émetteur/récepteur A ou B comporte une chaîne de transmission de données et une chaîne de réception de données.

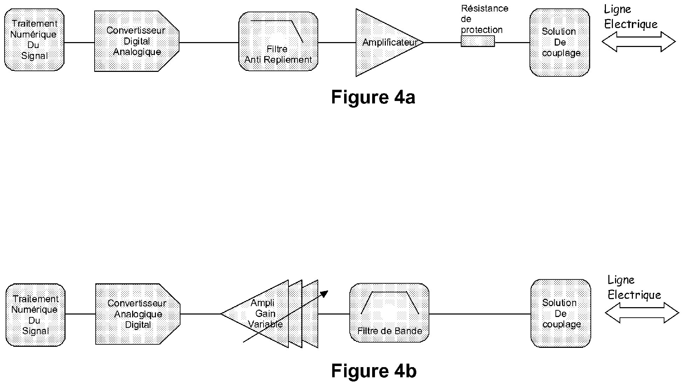

La chaîne de transmission de données illustrée en figure4A comprend :

- un module de traitement du signal numérique ;
- un module de conversion numérique vers analogique ;
- un filtre anti repliement ;
- un amplificateur ;
- une résistance de protection (merci de préciser ici si une telle résistance est toujours comprise dans un tel dispositif), et
- un dispositif de couplage (ou solution de couplage).

On notera que la résistance de protection permet de garantir la stabilité de l'amplificateur quelque soit la charge qui lui est présentée.

De plus, le module de traitement du signal numérique permet en particulier de modifier la puissance du signal qui est émis par le dispositif émetteur/récepteur vers un autre dispositif émetteur/récepteur faisant office de récepteur distant.

La chaîne de réception de données illustrée en figure4B, comprend :

- un dispositif de couplage (ou solution de couplage) ;
- un filtre de bande ;
- un amplificateur à gain variable ;
- un module de conversion analogique vers numérique
- un commutateur (ou switch), et
- un module de traitement du signal numérique.

Le commutateur peut être situé de manière non limitative soit :

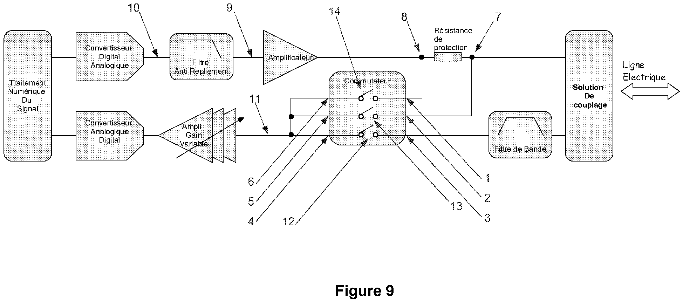

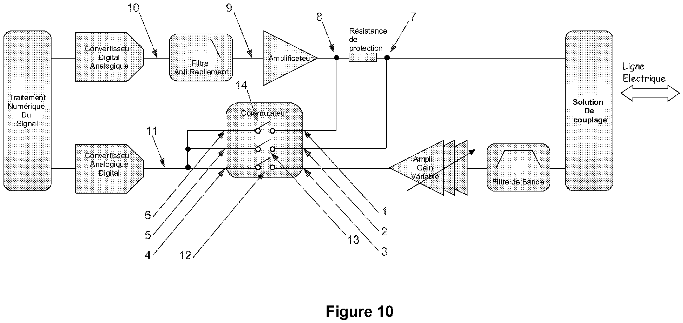

- entre l'amplificateur à gain variable et le filtre de bande comme illustré à la figure 9, ou
- entre le module de conversion analogique vers numérique et l'amplificateur à gain variable comme représenté en figure 10, ou encore
- entre le dispositif de couplage (ou solution de couplage) et le filtre de bande, tel qu'illustré en figure 3.

Ce commutateur comporte de manière non limitative trois bornes 1,2,3 en entrée et trois bornes 4,5,6 en sortie.

La borne 2 est de manière générale connectée en aval de la résistance de protection à l'emplacement 7.

La borne 1 est reliée en amont d'un des éléments constitutifs de la chaîne de transmission suivants :

- la résistance de protection à l'emplacement 8 ;
- l'amplificateur à l'emplacement 9, et
- le filtre anti repliement à l'emplacement 10.

Les bornes 4,5,6, sont quant à elles reliées en amont 11 du filtre de bande.

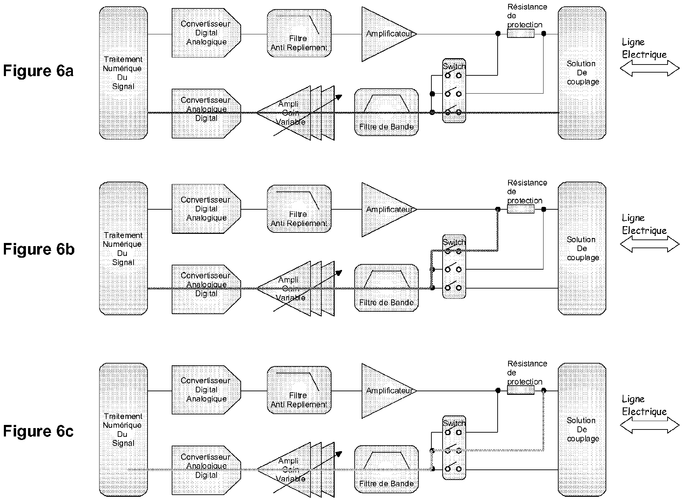

La borne 3 est reliée pour sa part au dispositif de couplage, et permet ainsi au signal entrant d'être reçu au niveau du module de traitement du signal numérique, ainsi qu'il est illustré en figure 6A.

Dans des modes de réalisation alternatifs, la borne 1 peut être connectée en amont d'un des éléments suivants :

- l'amplificateur à l'emplacement 9, ou
- le filtre anti repliement à l'emplacement 10.

Ainsi, les défauts du filtre anti repliement, et/ou de l'amplificateur peuvent être pris en compte lors des mesures effectuées.

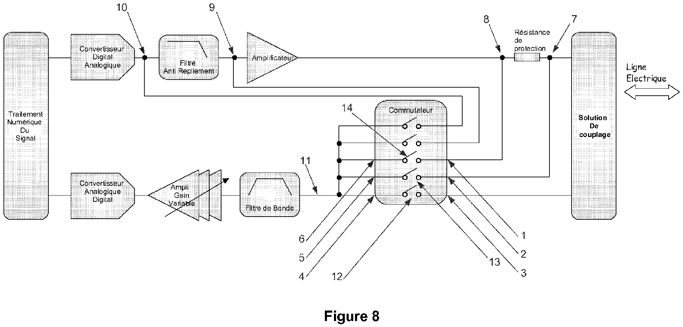

On notera que dans un autre mode de réalisation illustré à la figure 8, le commutateur comporte cinq bornes en entrée, et cinq bornes en sortie reliées en amont 11 du filtre de bande. Les cinq bornes en entrée étant respectivement reliées :

- en aval de la résistance de protection à l'emplacement 7 ;
- au dispositif de couplage ;
- en amont de la résistance de protection à l'emplacement 8 ;
- en amont de l'amplificateur à l'emplacement 9, et
- en amont du filtre anti repliement à l'emplacement 10.

Ce commutateur est relié à un module de commande qui contrôle l'activation des connecteurs 12,13 et 14. Ce module de commande est situé de manière non limitative dans le module de traitement numérique du signal.

Ce module de commande coopère avec un module de mesure de signal reçu dans le module de traitement du signal numérique de sorte à déterminer les tensions de chaque signal reçu en fonction de l'activation des connecteurs 12, 13 et 14, tel qu'illustré aux figures 6A, 6B et 6C.

Ce module de mesure est également localisé de manière non limitative dans le module de traitement numérique du signal.

Une fois les tensions des signaux reçus mesurées, le module de mesure les transmet à des moyens de traitement afin de calculer l'impédance présentée par la ligne électrique.

Pour ce faire, dans le mode de réalisation de la présente invention on utilise la chaîne de réception du dispositif émetteur/récepteur, pour mesurer les tensions en aval ($V_{Ana}$:tension d'Analyse) et en amont ($V_{Ref}$:tension de Référence) de la résistance de protection de la chaîne de transmission, qui devient donc une résistance de mesure $R_{mes}$.

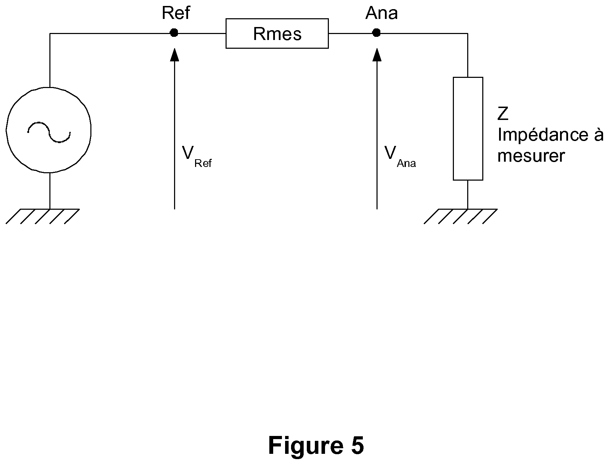

Dès lors ce calcul de l'impédance revient alors à déterminer l'impédance d'une charge à partir d'une résistance dans un circuit électronique, tel qu'illustré en figure 5 et comportant un générateur de signal 15, une résistance de mesure $R_{mes}$, et l'impédance Z à mesurer.

Cette impédance est obtenue à partir d'opérations réalisées en utilisant la formule suivante :

$$Z = \frac{Rmes}{\frac{VRef}{VAna} - 1}$$

avec, $V_{Ref}$ la tension au point Ref (tension de Référence) et $V_{Ana}$ (tension d'Analyse) la tension au point Ana. On notera que si $V_{Ref}$ et $V_{Ana}$ sont des tensions complexes, alors l'impédance calculée est aussi complexe.

Dans le procédé selon la présente invention, le dispositif émetteur/récepteur A émet un signal selon un masque de puissance d'émission, égal ou le plus proche possible de celui du niveau maximale de puissance autorisé, définie par le module de traitement du signal numérique de la chaîne de transmission.

Pour ce faire ce procédé comprend une étape d'initialisation mise en oeuvre par le dispositif émetteur/récepteur A, comportant les sous-étapes suivantes :

- activation par le module de commande du connecteur 14 du commutateur de sorte à orienter le signal X vers la chaîne de réception, telle qu'illustrée en figure 6B;
- émission d'un premier signal X par le module de traitement du signal numérique de la chaîne de transmission;
- mesure par le module de mesure de la tension $V_{Ref}$ en amont de la résistance de protection ;
- désactivation par le module de commande du connecteur 14 du commutateur ;
- activation par le module de commande du connecteur 13 du commutateur de sorte à orienter le signal X vers la chaîne de réception, telle qu'illustrée en figure 6C ;
- mesure par le module de mesure de la tension $V_{Ana}$ en aval de la résistance de protection, et
- désactivation par le module de commande du connecteur 13 du commutateur ;
- détermination de la fonction de transfert S11 qui ne prend évidemment pas en compte l'impédance de la chaîne de réception.

Les deux sous-étapes de mesure sont réalisées par le module de mesure qui est capable de mesurer le signal reçu par le module de traitement du signal numérique du dispositif A.

On peut préciser de manière alternative que le module de mesure peut se rapporter à un élément du dispositif émetteur/récepteur dans lequel la chaîne de réception est dupliquée et sur laquelle il peut alors réaliser des mesures régulières relatives à l'impédance de la liaison physique.

Les moyens de traitement déterminent par la suite la fonction de transfert S11 à partir d'opérations mettant en oeuvre la formule suivante :

$$S11 = \frac{(Z - Z0)}{(Z + Z0)} \text{ avec : } Z = \frac{Rmes}{\frac{VRef}{VAna} - 1}, \text{ et } Z0 = 50\Omega$$

On notera que Z0 se rapporte à l'impédance de référence qui est une impédance avec laquelle les mesures de puissance injectée sont réalisées. Dans le cadre des transmissions par courant porteur en ligne, communément désignée par les sigles CPL ou PLT (Power line Transmission), les organismes de standardisation définissent comme impédance de mesure la valeur 50 ohms.

Une fois la fonction de transfert S11 déterminée, les moyens de traitement du dispositif émetteur/récepteur associés au module de traitement du signal numérique définissent le masque de puissance en fonction de la fonction de transfert S11 afin de compenser la perte de puissance injectée dans la liaison physique.

Cette adaptation est réalisée par le module de traitement du signal qui est alors capable de modifier la puissance du signal émis en transmettant X/S0 à la place de X de sorte que le signal injecté corresponde alors à S0.X/S0 = X.

Avec X le signal en fréquence émis par le dispositif émetteur/récepteur A et S0.X une autre partie de ce signal injectée dans la liaison physique. S0 étant la fonction de transfert du signal injecté et correspondant à : $|S0|^2 = 1-|S11|^2$

L'adaptation du masque de puissance revient alors à augmenter/diminuer la puissance qui sera injectée dans la liaison physique de sorte que la puissance reçue par le dispositif émetteur/récepteur B soit supérieure à celle reçue sans application d'un masque de puissance adapté. Ainsi, les débits et/ou la qualité de service s'en trouvent améliorés, voir augmentés.

Dans un autre mode de réalisation, l'étape d'initialisation du dispositif émetteur/récepteur peut précéder l'étape d'adaptation de manière systématique en fonction de certaines conditions :

- changement de paramètres de configuration du dispositif A :changement de fréquence RF (acronyme de radio frequency) ;
- changement de durée de symbole,
- détection de changement des caractéristiques de la liaison physique.

En effet, cette étape d'initialisation est réalisée dès qu'il s'agit de mettre à jour le masque de puissance. Elle peut être programmée pour se dérouler de manière régulière ou encore cyclique en fonction d'un évènement détecté par le module de traitement du signal numérique du dispositif A associé aux moyens de traitement du dispositif A.

Dans un autre mode de réalisation, la fonction de transfert S11 peut également être déterminée en permanence (ou occasionnellement) à chaque émission de données effectuée par le dispositif émetteur/récepteur A afin d'estimer et d'ajuster en permanence (ou occasionnellement) le masque de puissance à adapter à chaque transmission.

Par ailleurs dans un mode de réalisation particulier, l'évolution de la fonction de transfert S11 peut également être déterminée dans le temps au cours d'une période correspondant à la variation périodique synchrones de la liaison physique avec la tension du secteur électrique afin de définir par la suite des masques de puissance adaptés à chaque période de variation.

Ainsi, il est entendu que l'invention n'est pas limitée aux exemples de réalisation décrits et illustrés. Elle n'est en outre pas limitée à ce type de transmission de données par courant porteur et peut trouver une application à d'autres types de transmission filaire ainsi qu'à des transmissions non filaires.

## Revendications

1.  Procédé d'émission d'un signal utilisant un masque de puissance d'émission, le signal étant émis par un dispositif émetteur/récepteur A relié à un dispositif émetteur/récepteur B par au moins une liaison physique, une partie dudit signal étant réfléchi par des discontinuités d'impédance dans la liaison physique et une autre partie du signal étant transmis au dispositif émetteur/récepteur B, ledit masque de puissance d'émission étant adapté en fonction d'une fonction de transfert S11 relative à la portion réfléchie du signal due aux discontinuités d'impédance de la liaison physique, de sorte à prendre en compte la puissance perdue lors de la transmission d'un signal, **caractérisé en ce que** ladite fonction de transfert S11 est déterminée par les étapes suivantes:

    - émission d'un signal par ledit dispositif émetteur/récepteur A;
    - mesure d'une première tension ($V_{Ref}$) en amont d'un élément composant la chaîne de transmission du dispositif émetteur/récepteur A;
    - mesure d'une deuxième tension ($V_{Ana}$) en aval dudit élément;
    - détermination de l'impédance (Z) de la liaison physique à partir desdites première et deuxième tensions; et
    - détermination de la fonction de transfert S11 à partir de ladite impédance.

2.  Procédé selon la revendication précédente, dans lequel les étapes pour déterminer la fonction de transfert S11 sont effectuées à des instants prédéfinis configurables.

3.  Procédé selon l'une des revendications précédentes, dans lequel plusieurs masques de puissances d'émissions sont définis et sélectionnés de façon périodique pour être utilisés lors de l'émission du signal.

**4.** Procédé selon l'une des revendications 1 à 3, dans lequel lesdites sous-étapes de mesures sont effectuées à partir de l'activation de connecteurs (14,13) d'un commutateur compris dans la chaîne de réception du dispositif émetteur/récepteur A.

**5.** Dispositif émetteur/récepteur A d'un signal en utilisant un masque de puissance d'émission vers un dispositif émetteur/récepteur B via au moins une liaison physique, une partie dudit signal étant réfléchi par des discontinuités d'impédance dans la liaison physique et une autre partie du signal étant transmis au dispositif émetteur/récepteur B, ledit dispositif émetteur/récepteur A comprenant une chaîne de transmission de données comprenant un module de traitement du signal numérique et une chaîne de réception de données comportant un commutateur ainsi que des moyens de traitement agencés avec ledit module de traitement du signal numérique susceptibles d'adapter le masque de puissance d'émission en fonction d'une fonction de transfert S11 relative à la portion réfléchie du signal due aux discontinuités d'impédance de la liaison physique de sorte à prendre en compte la puissance perdue lors de la transmission d'un signal, **caractérisé en ce que** ladite chaine de transmission de données et ladite chaine de réception du dispositif émetteur/récepteur A sont configurés pour :

- émettre un signal;
- mesurer une première tension ($V_{Ref}$) en amont d'un élément composant la chaîne de transmission;
- mesurer une deuxième tension ($V_{Ana}$) en aval dudit élément;
- déterminer de l'impédance (Z) de la liaison physique à partir desdites première et deuxième tensions; et
- déterminer de la fonction de transfert S11 à partir de ladite impédance.

**6.** Dispositif selon la revendication précédente, dans lequel la chaîne de transmission de données comporte :

- Le module de traitement du signal numérique;
- un module de conversion numérique vers analogique ;
- un filtre anti repliement ;
- un amplificateur ;
- une résistance de protection, et
- un dispositif de couplage.

**7.** Dispositif selon l'une des revendications 5 ou 6, dans lequel la chaîne de réception de données comporte :

- un dispositif de couplage ;
- un filtre de bande ;
- un amplificateur à gain variable ;
- un module de conversion analogique vers numérique;
- un commutateur, et
- un module de traitement du signal numérique.

**8.** Dispositif selon l'une des revendications 5 à 7, dans lequel ledit commutateur comprend

- une borne (1) reliée en amont d'un des éléments constitutifs de la chaîne de transmission suivants : la résistance de protection, l'amplificateur, ou le filtre anti repliement, et
- des bornes (4,5,6), reliées en amont (11) du filtre de bande de la chaîne de réception.

**9.** Dispositif selon l'une des revendications 5 à 8, comprenant un module de commande apte à contrôler l'activation de connecteurs (12,13,14) du commutateur.

**10.** Dispositif selon la revendication précédente, dans lequel le module de commande coopère avec un module de mesure de signal reçu par le module de traitement du signal numérique de sorte à déterminer les tensions ($V_{Ref}, V_{Ana}$) de chaque signal reçu en fonction de l'activation des connecteurs (12,13,14) du commutateur.

**11.** Modem à courant porteur comportant un dispositif selon l'une des revendications 5 à 10 précédentes.

**Patentansprüche**

**1.** Verfahren zum Übertragen eines Signals mittels einer Übertragungsleistungsmaske, wobei das Signal durch eine Vorrichtung zum Übertragen/ Empfangen A übertragen wird, das durch zumindest eine physische Verbindung mit einer Vorrichtung zum Übertragen/ Empfangen B verbunden ist, wobei ein Teil des Signals durch Impedanzdiskontinuitäten in der physischen Verbindung reflektiert wird, und ein anderer Teil des Signals zur Vorrichtung zum Übertragen/ Empfangen B übermittelt wird, wobei die Übertragungsleistungsmaske in Abhängigkeit von einer Transferfunktion S11 im Verhältnis zum reflektierten Teil des Signals aufgrund von Impedanzdiskontinuitäten in der physischen Verbindung angepasst wird, um die bei der Übermittlung eines Signals verlorene Leistung zu berücksichtigen, **dadurch gekennzeichnet, dass** die Transferfunktion S11 durch die folgenden Schritte bestimmt wird:

- Übertragen eines Signals durch die Vorrichtung zum Übertragen/ Empfangen A;
- Messen einer ersten Spannung ($V_{ref}$) stromaufwärts eines Elements zur Bildung der Übermittlungskette der Vorrichtung zum Übertragen/ Empfangen A;
- Messen einer zweiten Spannung ($V_{Ana}$) stromabwärts des Elements;
- Bestimmen der Impedanz (Z) der physischen Verbindung ausgehend von der ersten und zweiten Spannung; und
- Bestimmen der Transferfunktion S11 ausgehend von der Impedanz.

2. Verfahren nach dem vorstehenden Anspruch, wobei die Schritte zum Bestimmen der Transferfunktion S11 zu konfigurierbaren vorbestimmten Zeitpunkten durchgeführt werden.

3. Verfahren nach einem der vorstehenden Ansprüche, wobei mehrere Übertragungsleistungsmasken in periodischer Form definiert und ausgewählt werden, um bei der Übertragung des Signals verwendet zu werden.

4. Verfahren nach einem der Ansprüche 1 bis 3, wobei die Messungs-Unterschritte ausgehend von der Aktivierung von Verbindern (14, 13) eines Umschalters durchgeführt werden, der in der Kette zum Empfangen der Vorrichtung zum Übertragen/ Empfangen A enthalten ist.

5. Vorrichtung zum Übertragen/ Empfangen A eines Signals mittels einer Übertragungsleistungsmaske zu einer Vorrichtung zum Übertragen/ Empfangen B über zumindest eine physische Verbindung, wobei ein Teil des Signals durch Impedanzdiskontinuitäten in der physischen Verbindung reflektiert wird, und ein anderer Teil des Signals zur Vorrichtung zum Übertragen/ Empfangen B übermittelt wird, wobei die Vorrichtung zum Übertragen/ Empfangen A eine Übermittlungskette von Daten umfasst, ein Modul zur Bearbeitung des digitalen Signals und eine Kette zum Empfangen von Daten umfassend, die einen Umschalter umfasst, sowie Bearbeitungsmittel, die mit dem Modul zur Bearbeitung des digitalen Signals angeordnet sind, und die geeignet sind, die Übertragungsleistungsmaske in Abhängigkeit von einer Transferfunktion S11 im Verhältnis zum reflektierten Teil des Signals aufgrund von Impedanzdiskontinuitäten in der physischen Verbindung anzupassen, um die bei der Übermittlung eines Signals verlorene Leistung zu berücksichtigen, **dadurch gekennzeichnet, dass** die Übermittlungskette von Daten und die Kette zum Empfangen der Vorrichtung zum Übertragen/ Empfangen A konfiguriert sind, um:

- ein Signal zu übertragen;
- eine erste Spannung ($V_{ref}$) stromaufwärts eines Elements zur Bildung der Übermittlungskette der Vorrichtung zum Übertragen/ Empfangen A zu messen;
- eine zweite Spannung ($V_{Ana}$) stromabwärts des Elements zu messen;
- die Impedanz (Z) der physischen Verbindung ausgehend von der ersten und zweiten Spannung zu bestimmen; und
- die Transferfunktion S11 ausgehend von der Impedanz zu bestimmen.

6. Vorrichtung nach dem vorstehenden Anspruch, wobei die Übermittlungskette von Daten umfasst:

- Das Modul zum Bearbeiten des digitalen Signals;
- ein Modul zum Umwandeln von digital auf analog;
- einen Anti-Aliasing-Filter;
- einen Verstärker;
- einen Schutzwiderstand, und
- eine Koppelvorrichtung.

7. Vorrichtung nach einem der Ansprüche 5 oder 6, wobei die Kette zum Empfangen von Daten umfasst:

- eine Koppelvorrichtung;
- einen Bandfilter;
- einen Verstärker mit veränderlicher Verstärkung;
- ein Modul zum Umwandeln von digital auf analog;
- einen Umschalter, und
- ein Modul zur Bearbeitung des digitalen Signals.

**8.** Vorrichtung nach einem der Ansprüche 5 bis 7, wobei der Umschalter umfasst

- eine Klemme (1), die stromaufwärts an eines der folgenden Elemente, die die Übermittlungskette bilden angeschlossen ist: Schutzwiderstand, Verstärker, oder Anti-Aliasing-Filter, und
- Klemmen (4, 5, 6), die stromaufwärts (11) des Bandfilters der Kette zum Empfangen angeschlossen sind.

**9.** Vorrichtung nach einem der Ansprüche 5 bis 8, ein Steuermodul umfassend, das imstande ist, die Aktivierung der Verbinder (12, 13, 14) des Umschalters zu steuern.

**10.** Vorrichtung nach dem vorstehenden Anspruch, wobei das Steuermodul mit einem Signal-Messmodul zusammenwirkt, das von dem Modul zum Bearbeiten des digitalen Signals empfangen wird, um die Spannungen ($V_{Ref}$, $V_{Ana}$) eines jeden Signals zu bestimmen, das in Abhängigkeit von der Aktivierung der Verbinder (12, 13, 14) des Umschalters empfangen wird.

**11.** Trägerfrequenz-Modem, eine Vorrichtung nach einem der vorstehenden Ansprüche 5 bis 10 umfassend.

**Claims**

**1.** Method for transmitting a signal using a transmission power mask, with the signal being transmitted by a transceiver A connected to a transceiver B by at least one physical link, with a portion of said signal being reflected by impedance discontinuities in the physical link and another portion of the signal being transmitted to the transceiver B, said transmission power mask being adapted according to a transfer function S11 relative to the reflected portion of the signal due to the impedance discontinuities of the physical link, in such a way as to take account of the power lost during the transmission of a signal, **characterised in that** said transfer function S11 is determined by the following steps:

- transmission of a signal by said transceiver A;
- measurement of a first voltage ($V_{Ref}$) upstream from an element forming the chain of transmission of the transceiver A;
- measurement of a second voltage ($V_{Ana}$) downstream from said element;
- determination of the impedance (Z) of the physical link using said first and second voltages; and
- determination of the transfer function S11 using said impedance.

**2.** Method as claimed in the preceding claim, wherein the steps for determining the transfer function S11 are carried out at predefined instants that can be configured.

**3.** Method according to one of the preceding claims, wherein several transmission power masks are defined and selected periodically in order to be used during the transmission of the signal.

**4.** Method according to one of claims 1 to 3, wherein said measurement sub-steps are carried out using the activation of connectors (14, 13) of a switch included in the chain of reception of the transceiver A.

**5.** Transceiver A of a signal by using a transmission power mask to a transceiver B via at least one physical link, with a portion of said signal being reflected by impedance discontinuities in the physical link and another portion of the signal being transmitted to the transceiver B, said transceiver A comprising a chain for transmitting data comprising a module for processing the digital signal and a chain for receiving data comprising a switch as well as processing means arranged with said module for processing the digital signal able to adapt the transmission power mask according to a transfer function S11 relative to the reflected portion of the signal due to the impedance discontinuities of the physical link in such a way as to take account of the power lost during the transmission of a signal, **characterised in that** said chain for transmitting data and said chain for receiving of the transceiver A are configured to:

- transmit a signal;
- measure a first tension ($V_{Ref}$) upstream from an element forming the chain for transmitting;
- measure a second tension ($V_{Ana}$) downstream from said element;
- determine the impedance (Z) of the physical link using said first and second voltages; and
- determine the transfer function S11 using said impedance.

6. Device as claimed in the preceding claim, wherein the chain for transmitting data comprises:

- The module for processing the digital signal;
- a digital-to-analogue conversion module;
- an anti-aliasing filter;
- an amplifier;
- a protective resistor, and
- a coupling device.

7. Device according to one of claims 5 or 6, wherein the chain for receiving data comprises:

- a coupling device;
- a band filter;
- a variable gain amplifier;
- an analogue-to-digital conversion module;
- a switch, and
- a module for processing the digital signal.

8. Device according to one of claims 5 to 7, wherein said switch comprises

- a terminal (1) connected upstream from one of the following elements forming the chain for transmitting: the protective resistor, the amplifier, or the anti-aliasing filter, and
- terminals (4, 5, 6), connected upstream (11) from the band filter of the chain for receiving.

9. Device according to one of claims 5 to 8, comprising a control module able to control the activation of connectors (12, 13, 14) of the switch.

10. Device as claimed in the preceding claim, wherein the control module cooperates with a module for measuring the signal received by the module for processing the digital signal in such a way as to determine the voltage ($V_{Ref}$, $V_{Ana}$) of each signal received according to the activation of the connectors (12, 13, 14) of the switch.

11. Powerline modem comprising a device according to one of the preceding claims 5 to 10.

Transmission

X

Convertisseur
Digital
Analogique

Filtre
Anti Repliement

Amplificateur

Résistance
de
protection

S0.X

Traitement
Numérique
Du
Signal

Solution
De
couplage

Ligne
Electrique

S11.X

**Figure 1**

**Figure 2**

**Figure 3**

Traitement Numérique Du Signal — Convertisseur Digital Analogique — Filtre Anti Repliement — Amplificateur — Résistance de protection — Solution De couplage — Ligne Electrique

**Figure 4a**

Traitement Numérique Du Signal — Convertisseur Analogique Digital — Ampli Gain Variable — Filtre de Bande — Solution De couplage — Ligne Electrique

**Figure 4b**

**Figure 5**

**Figure 6a**

**Figure 6b**

**Figure 6c**

**Figure 7**

**Figure 8**

**Figure 9**

**Figure 10**

## RÉFÉRENCES CITÉES DANS LA DESCRIPTION

**Documents brevets cités dans la description**

- WO 2010037957 A

- EP 1300964 A